# EUROPEAN PATENT SPECIFICATION

(11) **EP 3 416 438 B1**
(45) Date of publication and mention of the grant of the patent: **26.05.2021**
(21) Application number: 17176457.4
(22) Date of filing: 16.06.2017
(51) Int. Cl.: H04W 60/00, H04W 8/18

(54) **ENHANCED MANAGEMENT OF THE ACCESS OF A USER EQUIPMENT TO A MOBILE COMMUNICATION NETWORK**
VERBESSERTE VERWALTUNG DES ZUGRIFFS EINES BENUTZERGERÄTS AUF EIN MOBILKOMMUNIKATIONSNETZWERK
GESTION AMÉLIORÉ DE L'ACCÈS D'UN ÉQUIPEMENT UTILISATEUR À UN RÉSEAU DE COMMUNICATION MOBILE

(43) Date of publication of application: 19.12.2018
(73) Proprietor: Deutsche Telekom AG, 53113 Bonn (DE)
(72) Inventor: NEGM, Mohamed, 53225 Bonn (DE)
(74) Representative: Schwöbel, Thilo K.

(56) References cited:
- US-A1- 2012 252 518
- US-A1- 2014 349 650
- US-A1- 2015 296 557
- "3rd Generation Partnership Project; Technical Specification Group Services and System Aspects; General Packet Radio Service (GPRS) enhancements for Evolved Universal Terrestrial Radio Access Network (E-UTRAN) access (Release 14)", 3GPP DRAFT; 23401-E30, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 16 March 2017 (2017-03-16), XP051257241, Retrieved from the Internet: URL:http://www.3gpp.org/ftp/Specs/Archive/ 23_series/23.401/ [retrieved on 2017-03-16]

## Description

### BACKGROUND

The present invention relates a method for an enhanced management of the access of a user equipment to a mobile communication network, wherein the mobile communication network comprises an access network and a core network, wherein the access network comprises at least a first restricted zone, wherein a second restricted zone is comprised in the access network of the mobile communication network or in an access network of a further mobile communication network.

Furthermore, the present invention relates to a system for an enhanced management of the access of a user equipment to the mobile communication network, wherein the mobile communication network comprises an access network and a core network, wherein the access network comprises at least a first restricted zone, wherein a second restricted zone is comprised in the access network of the mobile communication network or in an access network of a further mobile communication network.

Furthermore, the present invention relates to a mobility management functionality for an enhanced management of the access of a user equipment to a mobile communication network, especially in the form of a mobility management entity, wherein the mobility management functionality is comprised in the mobile communication network, wherein the mobile communication network comprises an access network and a core network, wherein the access network comprises at least a first restricted zone, wherein a second restricted zone is comprised in the access network of the mobile communication network or in an access network of a further mobile communication network.

Furthermore, the present invention relates to a program comprising a computer readable program code and a computer program product for an enhanced management of the access of a user equipment to a mobile communication network, the computer program product comprising a computer program stored on a storage medium, the computer program comprising program code which, when executed on a network node of a mobile communication network, especially on a mobility management functionality of the mobile communication network, or when executed in part on a mobility management functionality of the mobile communication network and in part on a user equipment, causes the network node, especially the mobility management functionality, or the mobility management functionality and the user equipment to perform a method according to an embodiment of the present invention.

The number of services and the variety of products offered in mobile communication networks to customers and users increases steadily. As a consequence, mobile communication network operators have started to customize their services and products based on consumer needs and market requirements. In many cases such services and products need to be restricted to particular clients, locations etc.. One basic and non-limiting example is location-based services. These services are provided to certain consumers based on their location in the mobile communication network, which is usually reported in the form of LAC/RAC/TAC (Location Area Code/Routing Area Code/Tracking Area Code). Access to these services is controlled with the help of mobility management functionalities such as mobility management entities (MME). The mobility management functionalities are configured to limit the access to these services and allow access only in a specific location (e.g., for specific eNodeBs TAC) and only for a specific group of user equipments based on identification information of said user equipments (e.g., for specific groups/ranges of International Mobile Subscriber Identity (IMSI)). Such services can be restricted outside the subscription zones to users. In this regard, network operators start to create regional roaming zones in their own network to prevent the users from using such specific services outside their subscribed locations. While such approaches allow to individualize the offered services and enhance the adaption of the offered services and products to customer needs, such methods bear the risk of devices and user equipments losing access to the network or specific services in specific locations for small or even large periods of time, which can lead to safety problems and heavily reduced customer satisfaction in many cases.

The following prior art documents are relevant for the definition of the invention: US 2015/296557 A1, US 2014/349650 A1, 3GPP draft document "3rd Generation Partnership Project; Technical Specification Group Services and System Aspects; General Packet Radio Service (GPRS) enhancements for Evolved Universal Terrestrial Radio Access Network (E-UTRAN) access (Release 14)", 23401-E30, 16 March 2017 (2017-03-16). J

### SUMMARY

It is an object of the present invention to provide a method for an enhanced management of the access of a user equipment (device) to a mobile communication network such that an improved adaptation to the requirements of different users and types of devices/user equipments is possible in order to decrease safety risks and/or to enable a broad usage of specific services and products with improved customer satisfaction.

The object of the present invention is achieved by a method for an enhanced management of the access of a user equipment to a mobile communication network, wherein the mobile communication network comprises an access network and a core network, wherein the access network comprises at least a first restricted zone, wherein a second restricted zone is comprised in the access network of the mobile communication network or in an access network of a further mobile communication network, wherein the user equipment is natively permitted to access the mobile communication network or the further mobile communication network within the second restricted zone, wherein the method comprises the following steps:
-- in a first step, a service request message, concerning a service requested by or for the user equipment within the first restricted zone, is transmitted to a mobility management functionality of the mobile communication network,
-- in a second step, after the first step, in case the user equipment natively lacks permission to access the mobile communication network within the first restricted zone, access to the mobile communication network is granted for the user equipment nonetheless in case:
-- a specific communication service, requested by or for the user equipment within the service request message, is part of a group of allowed communication services and/or
-- a specific connection context of the user equipment - during the first step - is part of a group of allowed connection contexts,
   and wherein access to the mobile communication network is denied for the user equipment otherwise.

It is thereby advantageously possible according to the present invention that a user equipment can be granted access to the mobile communication network in a first restricted zone (e.g., within a first area) even though the user equipment is not natively permitted to access the mobile communication network within the first restricted zone (e.g., by using a first base station entity within the first restricted zone) in case the user equipment requests a specific communication service (or a specific communication service is requested for the user equipment) that is part of a group of allowed communication services and/or in case the user equipment has a specific communication context that is part of a group of allowed connection contexts. It is possible that the group of allowed connection contexts and the group of allowed communication services are defined/set by the operator of the mobile communication network. According to the present invention, it is possible to realize an improved flexibility for the management of the network access for specific devices as well as for specific services and/or communication contexts and also combinations thereof.

According to an embodiment of the present invention, the native permission of the user equipment to access the mobile communication network or the further mobile communication network within the second restricted zone is due to an identification information of the user equipment being comprised in a further group of identification information, wherein the native lack of permission of the user equipment to access the mobile communication network within the first restricted zone is due to the identification information of the user equipment being not comprised in a group of identification information.

It is thereby possible according to an embodiment of the present invention that the user equipment lacks native permission to access the mobile communication network within the first restricted zone due to a group of identity information being free from an identity information of the user equipment, wherein the group of identity information preferably specifies/lists/defines which user equipments are (generally) granted access within the first restricted zone.

According to an embodiment of the present invention, the first restricted zone is related to:
-- a specific location area code or a group of local area codes,
-- a specific routing area code or a group of routing area codes, and/or
-- a specific tracking area code or a group of tracking area codes,
wherein especially the second restricted zone is related to:
-- a further specific location area code or a further group of local area codes,
-- a further specific routing area code or a further group of routing area codes, and/or
-- a further specific tracking area code or a further group of tracking area codes.

Thereby, it is possible according to an embodiment of the present invention that the first restricted zone comprises specific base station entities (at least a first base station entity) and especially that the first restricted zone is an area or is associated to an area.

According to an embodiment of the present invention, within the second step, access to the mobile communication network is only granted for a predefined time duration, wherein especially the predefined time duration is dependent on the specific communication service and/or the specific connection context and/or the first restricted zone and/or the identification information of the user equipment, wherein after the predefined time duration has expired, either:
-- the user equipment is detached from the mobile communication network,
-- the user equipment is forced to reattach to the mobile communication network, and/or
-- a forced-handover is performed for the user equipment.

Thereby, it is possible according to an embodiment of the present invention that a predefined time duration is set by the operator of the mobile communication network, wherein the predefined time duration depends on the specific communication service and/or the specific connection context and/or the first restricted zone and/or the identification information of the user equipment. It is possible that - after the predefined time duration has expired - the user equipment is detached from the mobile communication network, the user equipment is forced to reattach to the mobile communication network, and/or a forced-handover is performed for the user equipment, especially to a base station entity (e.g. a second base station entity) comprised in a non-restricted zone or a second restricted zone.

According to an embodiment of the present invention, the mobility management functionality comprises instruction information and/or receives instruction information prior to the first step, during the first step or between the first step and the second step, the instruction information specifying:
-- the group of identity information,
-- the group of allowed communication services, and/or
-- the group of allowed connection contexts, and/or
-- especially the predefined time duration, and/or
-- especially the predefined groups of bearers.

It is thereby possible according to an embodiment of the present invention that the mobility management functionality has access to instruction information and/or receives instruction information (e.g., by another network entity of the mobile communication network), wherein the instruction information comprise information defining (i.e., specifying or comprising information on) the group of identity information, the group of allowed communication services, and/or the group of allowed connection contexts, and/or especially the predefined time duration, and/or especially the predefined groups of bearers. It is, e.g., possible that the group of allowed communication services comprises one or a multitude of the following:
handover procedures, cell relocation procedures, attach procedures, dedicated bearer activations, tracking area updates, location area updates, routing area updates.

It is also possible that the group of allowed connection contexts comprises one or a multitude of the following:
a requesting user equipment being in idle mode, a requesting user equipment being in connected mode, a predefined group of bearers being active for a requesting user equipment, a predefined number of bearers being active for a requesting user equipment.

It is also advantageously possible according to an embodiment of the present invention that the instruction information comprises information regarding how many bearers are allowed to be used in the first restricted zone and that any extra/additional bearers are to be rejected (by the mobility management functionality).

It is also advantageously possible according to an embodiment of the present invention that - within the second step - the mobility management functionality only allows specific bearers or all bearers to remain active or to be activated, especially based on a bearer quality class identifier value (QCI).

Thereby, it is possible that - even in case network access is granted for the user equipment in the first restricted zone in the second step - the network access is limited to specific bearers or a specific number of bearers, wherein information on the specific bearers and/or the specific number of bearers is especially comprised in the instruction information, wherein bearers, which are not the specific bearers or additional bearers exceeding the specific number of bearers are preferably not allowed to be activated by the mobility management functionality (i.e., activation is denied in the second step).

It is generally possible, according the present invention that - within the second step - by granting access to the mobile communication network, only access to a specific service (especially requested within the service request message) or specific product (especially requested within the service request message) is granted for the user equipment and access to other services or products is denied.

According to an embodiment of the present invention, the connection context of the user equipment - during the first step - corresponds to:
-- the user equipment being in idle mode,
-- the user equipment being in connected mode,
-- a predefined group of bearers being active for the user equipment, and/or
-- a predefined number of bearers being active for the user equipment.

According to an embodiment of the present invention, the identification information comprises or corresponds to:
-- an International Mobile Subscriber Identity related to the user equipment, and/or
-- an International Mobile Equipment Identity related to the user equipment.

It is advantageously possible according to an embodiment of the present invention that a variety of different identification information (identity information) is usable. It is e.g., possible that the identification information corresponds to International Mobile Subscriber Identities, International Mobile Equipment Identities, mobile subscriber identification number, etc.. Accordingly, it is possible that the group of identification information comprises ranges/groups of International Mobile Subscriber Identities, International Mobile Equipment Identities, mobile subscriber identification numbers, etc. and that the further group of identification information comprises further ranges/groups of International Mobile Subscriber Identities, International Mobile Equipment Identities, mobile subscriber identification numbers etc..

According to an embodiment of the present invention, the specific communication service, requested by or for the user equipment within the service request message, corresponds to or is:
-- a handover procedure regarding the user equipment,
-- a cell relocation procedure regarding the user equipment,
-- an attach procedure of the user equipment,
-- a dedicated bearer activation for the user equipment,
-- a tracking area update regarding the user equipment,
-- a location area update regarding the user equipment, or
-- a routing area update regarding the user equipment.

It is thereby advantageously possible according to the present invention that a user equipment requesting a specific communication service within the first restricted zone is granted access in the second step, although the user equipment lacks native permission to access the mobile communication network within the first restricted zone, in case the requested specific communication service (for or by the user equipment as part of the service request message) is part of a group of allowed communication services within the first restricted zone.

According to an embodiment of the present invention, the user equipment is an Internet of Things [loT]-user equipment.

It is thereby possible according to an embodiment of the present invention that the user equipment is and Internet of Things device, e.g., a device usable for car to car communication, device to device communication, etc..

According to methods known from the state of the art, a device may be registered for a critical service (e.g. car to car communication) and moving seamlessly between unrestricted eNodeBs (or other base station entities) of the same or of different mobile communication network operators. Due to poor coverage conditions or poor radio planning, there are some areas which are not covered properly by unrestricted eNodeBs which offer the required critical service (e.g. car to car communication). When entering, being comprised in or being close to such an area, the device tries to camp on a restricted eNodeB as this is the only available option. The restricted eNodeB is, e.g., restricted based on a location information (such as a tracking area code) and an International Mobile Subscriber Identity range (i.e., due to its specific International Mobile Subscriber Identity, the device may not be allowed to access the network or network services for the tracking area code of the restricted eNodeB), and thus the request for connection will be rejected. As a consequence, the device will lose connection until there is a proper eNodeB which is not restricted and/or which the device can connect to. This poses great risks, as the car to car communication might be unavailable for the device for short or even long periods of time.

According to the present invention, it is possible that a group of allowed communication services and a group of allowed connection contexts is defined (e.g., within an instruction information). For example, it is possible that a device (like the above device, being registered to a critical service like car to car communication) connects to a mobile communication network via a second base station entity in a second restricted zone, in which the device has native access, or in a non-restricted zone. In the following, it is possible that the device moves form the second restricted zone or the non-restricted zone to the first restricted zone (e.g., to the coverage area of a first base station entity of the first restricted zone) and a specific service (in this case a handover) with a specific connection context (in this case with active bearers) is requested for/by the device within a service request message. It is possible that handover procedures are part of a group of allowed communication services and/or that having active bearers (i.e., a specific communication context) is part of a group of allowed communication contexts and the device is granted access to mobile communication network via the first base station entity (within the first restricted zone). Thus, even though the device lacks native permission to access the mobile communication network (or a specific service of the mobile communication network) in the first restricted zone (because its identification information is not comprised in the group of identification information), the device will still be granted access in the first restricted zone, and accessing car to car communication services/information remains possible even within the first restricted zone.

The object is also achieved by a system for an enhanced management of the access of a user equipment to a mobile communication network, wherein the mobile communication network comprises an access network and a core network, wherein the access network comprises at least a first restricted zone, wherein a second restricted zone is comprised in the access network of the mobile communication network or in an access network of a further mobile communication network, wherein the user equipment is natively permitted to access the mobile communication network or the further mobile communication network within the second restricted zone, wherein
-- a mobility management functionality of the mobile communication network is configured to receive a service request message, concerning a service requested by or for the user equipment within the first restricted zone, in a first step, wherein,
-- in case the user equipment natively lacks permission to access the mobile communication network within the first restricted zone, the mobility management functionality is configured to grant access to the mobile communication network for the user equipment nonetheless in case:
-- a specific communication service, requested by or for the user equipment within the service request message, is part of a group of allowed communication services and/or
-- a specific connection context of the user equipment - during the first step - is part of a group of allowed connection contexts,
and wherein the mobility management functionality is configured to deny access to the mobile communication network for the user equipment otherwise.

Furthermore, the object of the present invention is achieved by a mobility management functionality for an enhanced management of the access of a user equipment to a mobile communication network, especially in the form of a mobility management entity, wherein the mobility management functionality is comprised in the mobile communication network, wherein the mobile communication network comprises an access network and a core network, wherein the access network comprises at least a first restricted zone, wherein a second restricted zone is comprised in the access network of the mobile communication network or in an access network of a further mobile communication network, wherein the user equipment is natively permitted to access the mobile communication network or the further mobile communication network within the second restricted zone, wherein
-- the mobility management functionality is configured to receive a service request message, concerning a service requested by or for the user equipment within the first restricted zone, in a first step, wherein,
-- in case the user equipment natively lacks permission to access the mobile communication network within the first restricted zone, the mobility management functionality is configured to grant access to the mobile communication network for the user equipment nonetheless in case:
-- a specific communication service, requested by or for the user equipment within the service request message, is part of a group of allowed communication services and/or
-- a specific connection context of the user equipment - during the first step - is part of a group of allowed connection contexts,
and wherein the mobility management functionality is configured to deny access to the mobile communication network for the user equipment otherwise.

Furthermore, the object of the present invention is achieved by program comprising a computer readable program code which, when executed on a network node of a mobile communication network, especially on a mobility management functionality of the mobile communication network, or when executed in part on a mobility management functionality of the mobile communication network and in part on a user equipment, causes the network node, especially the mobility management functionality, or the mobility management functionality and the user equipment to perform a method according to an embodiment of the present invention.

Furthermore, the object of the present invention is achieved by a computer program product for an enhanced management of the access of a user equipment to a mobile communication network, the computer program product comprising a computer program stored on a storage medium, the computer program comprising program code which, when executed on a network node of a mobile communication network, especially on a mobility management functionality of the mobile communication network, or when executed in part on a mobility management functionality of the mobile communication network and in part on a user equipment, causes the network node, especially the mobility management functionality, or the mobility management functionality and the user equipment to perform a method according to an embodiment of the present invention.

These and other characteristics, features and advantages of the present invention will become apparent from the following detailed description, taken in conjunction with the accompanying drawings, which illustrate, by way of example, the invention. The description is given for the sake of example only, without limiting the scope of the invention. The reference figures quoted below refer to the attached drawings.

### BRIEF DESCRIPTION OF THE DRAWINGS

**Figure 1** schematically illustrates a system according to an embodiment of the present invention.
**Figure 2** schematically illustrates a flow diagram according to an embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

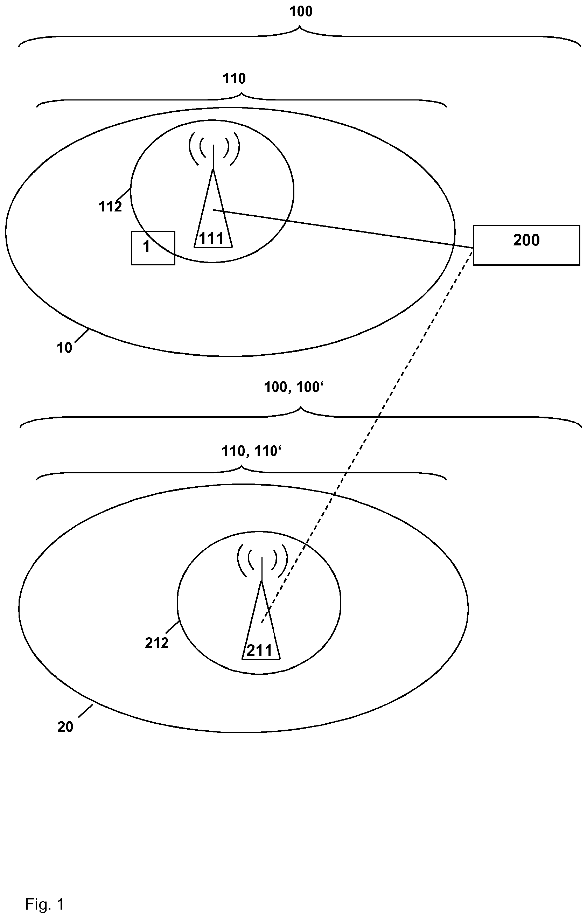

In Figure 1, a system for an enhanced management of the access of a user equipment 1 to a mobile communication network 100 is schematically illustrated. The mobile communication network 100 typically comprises an access network 110 and a core network. The access network 110 contains a first restricted zone 10 with at least a first base station entity 111. The first base station entity 111 serves a first radio cell/ first coverage area 112. It is generally possible that the first restricted zone comprises a plurality of base station entities serving a plurality of coverage areas. The mobile communication network 100 further comprises a mobility management functionality 200, e.g., a mobility management entity 200 or an entity 200, which is configured to have mobility management functionality. The mobility management functionality 200 has a direct communication link or an indirect communication link (via intermediate entities of the mobile communication network 100) to the first base station entity 111. Furthermore, a second restricted zone 20 is comprised in the access network 110 of the mobile communication network 100 or in an access network 110' of a further mobile communication network 100'. The second restricted zone 20 comprises a second base station entity 211 serving a second radio cell/ second coverage area 212. In case the second restricted zone 20 is comprised in the mobile communication network 200, it is preferred that the mobility management functionality 200 has a direct communication link or an indirect communication link (via intermediate entities of the mobile communication network 100) to the second base station entity 211 (visualized by the dashed line in Figure 1). It is also possible that further restricted or non-restricted zones are comprised in the mobile communication network 100 or the further mobile communication network 110'. The first restricted zone 10 is related to and/or associated with (a group of) location information, e.g., a (group of) tracking area code(s), a (group of) location area code(s), a (group of) routing area code(s). The second restricted zone 20 is related to and/or associated with a further (group of) location information, e.g., a further (group of) tracking area code(s), a further (group of) location area code(s), a further (group of) routing area code(s). The user equipment 1, which can generally be any communications device, is natively permitted to access the mobile communication network 100 or the further mobile communication network 100' within the second restricted zone 20 because an identification information of the user equipment is comprised in a further group of identification information, wherein the further group of identification information comprises information on which user equipments (based on their corresponding identification information) are allowed to access the mobile communication network 100 or the further mobile communication network 100' within the second restricted zone 20, i.e. for the further group of location information. The user equipment 1 lacks native permission to access the mobile communication network 100 within the first restricted zone 10, especially because a group of identification information is free from an identification information of the user equipment 1, wherein the group of identification information comprises information on which user equipments (based on their corresponding identification information) are allowed to access the mobile communication network 100 within the first restricted zone 10, i.e., for the group of location information.

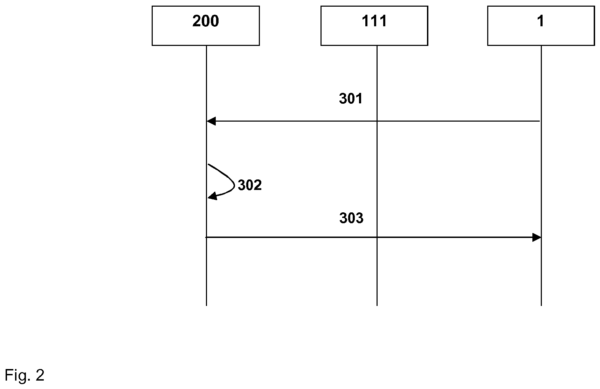

In Figure 2 a flow diagram according to an embodiment of the present invention is schematically illustrated. In a first step, a mobility management functionality 200 of the mobile communication network 100 receives a service request message, concerning a service requested by or for the user equipment 1 within the first restricted zone 10 as part of a first process step 301. It is possible that the service request message is transmitted from the user equipment via the first base station entity 111 to the mobility management functionality 200 or that a corresponding service request message is transmitted from the user equipment to the first base station entity 111 which triggers the service request message transmission from the first base station entity 111 to the mobility management functionality 200. It is also possible that a transmission of the service request message from the first base station entity 111 to the mobility management functionality 200 is triggered by a corresponding service request message transmitted from a further base station entity to the first base station entity 111. It is also possible that the service request message is transmitted via intermediate network entities (or one intermediate network entity) from the first base station entity 111 to the mobility management functionality 200. It is also possible that the service request message is transmitted from a further base station entity or from a further entity of the mobile communication network 100 or the further mobile communication network 100' to the mobility management functionality 200, possibly via intermediate network entities and possibly triggered by a corresponding service request message transmitted from the user equipment 1 to the further base station entity or to the further entity of the mobile communication network 100 or the further mobile communication network 100'. The exact flow of messages during the first process step 301 may also depend on the service that is requested by or for the user equipment as part of the service request message within the first step. It is possible that the service requested by or for the user equipment 1 is a handover procedure regarding the user equipment 1, a cell relocation procedure regarding the user equipment 1, an attach procedure of the user equipment 1, a dedicated bearer activation for the user equipment 1, a tracking area update regarding the user equipment 1, a location area update regarding the user equipment 1, or a routing area update regarding the user equipment 1. In a second process step 302 - in case the user equipment lacks native permission to access the mobile communication network 100 in the first restricted zone 10, the mobility management functionality 200 checks/compares/analyzes/ whether the service requested by or for the user equipment 1 (i.e., the specific communication service requested by or for the user equipment 1) within the service request message during the first process step 301 is part of a group of allowed communication services (for the first restricted zone 10) and/or whether a specific communication context of the user equipment during the first step is part of a group of allowed communication contexts (for the first restricted zone 10). In order to so, the mobility management functionality comprises or has access to instruction information, wherein the instruction information specifies the group of allowed communication services and/or the group of allowed communication contexts. If the specific communication service, requested by or for the user equipment 1 within the service request message, is part of a group of allowed communication services and/or the specific connection context of the user equipment 1 - during the first step - is part of a group of allowed connection contexts, the mobility management functionality 200 grants access to the telecommunication network 100 for the user equipment 1 (or starts a message flow for granting access to the telecommunication network 100 for the user equipment 1, e.g., by sending/transmitting a message to the first base station entity 111). If the specific communication service, requested by or for the user equipment 1 within the service request message, is not part of the group of allowed communication services and/or the specific connection context of the user equipment 1 - during the first step - is not part of the group of allowed connection contexts, the mobility management functionality 200 denies access to the telecommunication network 100 for the user equipment 1 (or starts a message flow that results in denying access to the telecommunication network 100 for the user equipment 1, e.g., by sending/transmitting a message the first base station entity 111). In a third process step 303, it is possible that the user equipment 1 is informed via an answer message by the mobility management functionality 200 or by the first base station entity 111 or by a further base station entity whether or not access to the mobile communication network 100 in the first restricted zone is granted for the user equipment 1. It is especially preferred that access to the mobile communication network 100 for the user equipment 1 within the first restricted zone 10 is granted only for a predefined time duration, wherein preferably the predefined time duration is dependent on the specific communication service and/or the specific connection context and/or the first restricted zone 10 and/or the identification information of the user equipment 1 and/or the type of the user equipment 1 (e.g., whether the user equipment 1 is a car to car communication type user equipment). After the predefined time duration has expired, the user equipment 1 is detached from the mobile communication network 100, and/or the user equipment 1 is forced to reattach to the mobile communication network 100, and/or a forced-handover is performed for the user equipment 1 (not shown). It is possible that the user equipment 1 is informed about the predefined time duration and also about whether the user equipment 1 is detached, forced to reattached and/or forced to handover after the predefined time duration has expired, e.g., as part of the third process step 303 .

## Claims

1. Method for an enhanced management of the access of a user equipment (1) to a mobile communication network (100), wherein the mobile communication network (100) comprises an access network (110) and a core network, wherein the access network (110) comprises at least a first restricted zone (10), wherein a second restricted zone (20) is comprised in the access network (110) of the mobile communication network (100) or in an access network (110') of a further mobile communication network (100'), wherein the user equipment (1) is natively permitted to access the mobile communication network (100) or the further mobile communication network (100') within the second restricted zone (20), wherein the method comprises the following steps:
-- in a first step, a service request message, concerning a service requested by or for the user equipment (1) within the first restricted zone (10), is transmitted to a mobility management functionality (200) of the mobile communication network (100),
-- in a second step, after the first step, in case the user equipment (1) natively lacks permission to access the mobile communication network (100) within the first restricted zone (10), access to the mobile communication network (100) is granted for the user equipment (1) nonetheless in case:
-- a specific communication service, requested by or for the user equipment (1) within the service request message, is part of a group of allowed communication services and/or
-- a specific connection context of the user equipment (1) - during the first step - is part of a group of allowed connection contexts,
and wherein access to the mobile communication network (100) is denied for the user equipment (1) otherwise.

2. Method according to claim 1, wherein the native permission of the user equipment (1) to access the mobile communication network (100) or the further mobile communication network (100') within the second restricted zone (20) is due to an identification information of the user equipment (1) being comprised in a further group of identification information, wherein the native lack of permission of the user equipment (1) to access the mobile communication network (100) within the first restricted zone (10) is due to the identification information of the user equipment (1) being not comprised in a group of identification information.

3. Method according to any one of the preceding claims, wherein the first restricted zone (10) is related to:
-- a specific location area code, LAC, or a group of local area codes,
-- a specific routing area code, RAC, or a group of routing area codes, and/or
-- a specific tracking area code, TAC, or a group of tracking area codes,
wherein especially the second restricted zone (20) is related to:
-- a further specific location area code or a further group of local area codes,
-- a further specific routing area code or a further group of routing area codes, and/or
-- a further specific tracking area code or a further group of tracking area codes.

4. Method according to any one of the preceding claims, wherein within the second step, access to the mobile communication network (100) is only granted for a predefined time duration, wherein especially the predefined time duration is dependent on the specific communication service and/or the specific connection context and/or the first restricted zone (10) and/or the identification information of the user equipment (1), wherein after the predefined time duration has expired, either:
-- the user equipment (1) is detached from the mobile communication network (100),
-- the user equipment (1) is forced to reattach to the mobile communication network (100), and/or
-- a forced-handover is performed for the user equipment (1).

5. Method according to any one of the preceding claims, wherein the mobility management functionality (200) comprises instruction information and/or receives instruction information prior to the first step, during the first step or between the first step and the second step, the instruction information specifying:
-- the group of identity information,
-- the group of allowed communication services, and/or
-- the group of allowed connection contexts, and/or
-- especially the predefined time duration, and/or
-- especially the predefined groups of bearers.

6. Method according to any one of the preceding claims, wherein the connection context of the user equipment (1) - during the first step - corresponds to:
-- the user equipment (1) being in idle mode,
-- the user equipment (1) being in connected mode,
-- a predefined group of bearers being active for the user equipment (1), and/or
-- a predefined number of bearers being active for the user equipment (1).

7. Method according to any of claims 2 to 6, wherein the identification information comprises or corresponds to:
-- an International Mobile Subscriber Identity, IMSI, related to the user equipment (1), and/or
-- an International Mobile Equipment Identity, IMEI, related to the user equipment (1).

8. Method according to any one of the preceding claims, wherein the specific communication service, requested by or for the user equipment (1) within the service request message, corresponds to or is:
-- a handover procedure regarding the user equipment (1),
-- a cell relocation procedure regarding the user equipment (1),
-- an attach procedure of the user equipment (1),
-- a dedicated bearer activation for the user equipment (1),
-- a tracking area update regarding the user equipment (1),
-- a location area update regarding the user equipment (1), or
-- a routing area update regarding the user equipment (1).

9. Method according to any one of the preceding claims, wherein the user equipment (1) is an Internet of Things, loT, user equipment (1).

10. System for an enhanced management of the access of a user equipment (1) to a mobile communication network (100), wherein the mobile communication network (100) comprises an access network (110) and a core network, wherein the access network (110) comprises at least a first restricted zone (10), wherein a second restricted zone (20) is comprised in the access network (110) of the mobile communication network (100) or in an access network (110') of a further mobile communication network (100'), wherein the user equipment (1) is natively permitted to access the mobile communication network (100) or the further mobile communication network (100') within the second restricted zone (20), wherein
-- a mobility management functionality (200) of the mobile communication network (100) is configured to receive a service request message, concerning a service requested by or for the user equipment (1) within the first restricted zone (10), in a first step, wherein,
-- in case the user equipment (1) natively lacks permission to access the mobile communication network (100) within the first restricted zone (10), the mobility management functionality (200) is configured to grant access to the mobile communication network (100) for the user equipment (1) nonetheless in case:
-- a specific communication service, requested by or for the user equipment (1) within the service request message, is part of a group of allowed communication services and/or
-- a specific connection context of the user equipment (1) - during the first step - is part of a group of allowed connection contexts,
and wherein the mobility management functionality (200) is configured to deny access to the mobile communication network (100) for the user equipment (1) otherwise.

11. Mobility management functionality (200) for an enhanced management of the access of a user equipment (1) to a mobile communication network (100), especially in the form of a mobility management entity (200), wherein the mobility management functionality (200) is comprised in the mobile communication network (100), wherein the mobile communication network (100) comprises an access network (110) and a core network, wherein the access network (110) comprises at least a first restricted zone (10), wherein a second restricted zone (20) is comprised in the access network (110) of the mobile communication network (100) or in an access network (110') of a further mobile communication network (100'), wherein the user equipment (1) is natively permitted to access the mobile communication network (100) or the further mobile communication network (100') within the second restricted zone (20), wherein
-- the mobility management functionality (200) is configured to receive a service request message, concerning a service requested by or for the user equipment (1) within the first restricted zone (10), in a first step, wherein,
-- in case the user equipment (1) natively lacks permission to access the mobile communication network (100) within the first restricted zone (10), the mobility management functionality (200) is configured to grant access to the mobile communication network (100) for the user equipment (1) nonetheless in case:
-- a specific communication service, requested by or for the user equipment (1) within the service request message, is part of a group of allowed communication services and/or
-- a specific connection context of the user equipment (1) - during the first step - is part of a group of allowed connection contexts,
and wherein the mobility management functionality (200) is configured to deny access to the mobile communication network (100) for the user equipment (1) otherwise.

12. Computer program comprising instructions which, when executed on a network node of a mobile communication network (100), especially on a mobility management functionality (200) of the mobile communication network (100), or when executed in part on a mobility management functionality (200) of the mobile communication network and in part on a user equipment (1), causes the network node, especially the mobility management functionality (200), or the mobility management functionality (200) and the user equipment (1) to perform a method according to any one of claims 1 to 9.

13. Computer-readable storage medium for an enhanced management of the access of a user equipment (1) to a mobile communication network (100), the computer-readable storage medium comprising instructions which, when executed on a network node of a mobile communication network (100), especially on a mobility management functionality (200) of the mobile communication network (100), or when executed in part on a mobility management functionality (200) of the mobile communication network and in part on a user equipment (1), causes the network node, especially the mobility management functionality (200), or the mobility management functionality (200) and the user equipment (1) to perform a method according to any one of claims 1 to 9.

## Patentansprüche

1. Verfahren für ein verbessertes Management des Zugangs einer Benutzerausrüstung (1) zu einem Mobilkommunikationsnetz (100), wobei das Mobilkommunikationsnetz (100) ein Zugangsnetz (110) und ein Kernnetz umfasst, wobei das Zugangsnetz (110) mindestens eine erste Sperrzone (10) umfasst, wobei eine zweite Sperrzone (20) in dem Zugangsnetz (110) des Mobilkommunikationsnetzes (100) oder in einem Zugangsnetz (110') eines weiteren Mobilkommunikationsnetzes (100') enthalten ist, wobei die Benutzerausrüstung (1) nativ die Erlaubnis besitzt, auf das Mobilkommunikationsnetz (100) oder das weitere Mobilkommunikationsnetz (100') innerhalb der zweiten Sperrzone (20) zugreifen zu dürfen, wobei das Verfahren die folgenden Schritte umfasst:
- in einem ersten Schritt wird eine Dienstanfragenachricht, die einen Dienst betrifft, der durch oder für die Benutzerausrüstung (1) innerhalb der ersten Sperrzone (10) angefragt wird, an eine Mobilitätsmanagementfunktionalität (200) des Mobilkommunikationsnetzes (100) gesendet,
- in einem zweiten Schritt, nach dem ersten Schritt, wird, falls die Benutzerausrüstung (1) nicht nativ die Erlaubnis besitzt, auf das Mobilkommunikationsnetz (100) innerhalb der ersten Sperrzone (10) zugreifen zu dürfen, der Zugriff auf das Mobilkommunikationsnetz (100) für die Benutzerausrüstung (1) dennoch gewährt, falls:
- ein spezifischer Kommunikationsdienst, der durch oder für die Benutzerausrüstung (1) in der Dienstanfragenachricht angefragt wird, Teil einer Gruppe erlaubter Kommunikationsdienste ist und/oder
- ein spezifischer Verbindungskontext der Benutzerausrüstung (1) - während des ersten Schrittes - Teil einer Gruppe erlaubter Verbindungskontexte ist und wobei der Benutzerausrüstung (1) anderenfalls der Zugriff auf das Mobilkommunikationsnetz (100) verweigert wird.

2. Verfahren nach Anspruch 1, wobei die native Erlaubnis der Benutzerausrüstung (1), auf das Mobilkommunikationsnetz (100) oder das weitere Mobilkommunikationsnetz (100') innerhalb der zweiten Sperrzone (20) zugreifen zu dürfen, darauf beruht, dass eine Identifikationsinformation der Benutzerausrüstung (1) in einer weiteren Gruppe von Identifikationsinformationen enthalten ist, wobei das native Fehlen der Erlaubnis der Benutzerausrüstung (1), auf das Mobilkommunikationsnetz (100) innerhalb der ersten Sperrzone (10) zugreifen zu dürfen, darauf beruht, dass die Identifikationsinformation der Benutzerausrüstung (1) nicht in einer Gruppe von Identifikationsinformationen enthalten ist.

3. Verfahren nach einem der vorangehenden Ansprüche, wobei sich die erste Sperrzone (10) bezieht auf:
- einen spezifischen Aufenthaltsbereichscode (*Location Area Code,* LAC) oder eine Gruppe von Ortsvorwahlen,
- einen spezifischen Routungsbereichscode (*Routing Area Code,* RAC) oder eine Gruppe von Routungsbereichscodes und/oder
- einen spezifischen Verfolgungsbereichscode (*Tracking Area Code,* TAC) oder eine Gruppe von Verfolgungsbereichscodes
wobei sich insbesondere die zweite Sperrzone (20) bezieht auf:
- einen weiteren spezifischen Aufenthaltsbereichscode oder eine weitere Gruppe von Ortsvorwahlen,
- einen weiteren spezifischen Routungsbereichscode oder eine weitere Gruppe von Routungsbereichscodes und/oder
- einen weiteren spezifischen Verfolgungsbereichscode oder eine weitere Gruppe von Verfolgungsbereichscodes.

4. Verfahren nach einem der vorangehenden Ansprüche, wobei innerhalb des zweiten Schrittes der Zugriff auf das Mobilkommunikationsnetz (100) nur für eine vorgegebene Zeitdauer gewährt wird, wobei insbesondere die vorgegebene Zeitdauer von dem spezifischen Kommunikationsdienst und/oder dem spezifischen Verbindungskontext und/oder der ersten Sperrzone (10) und/oder der Identifikationsinformation der Benutzerausrüstung (1) abhängig ist, wobei nach Ablauf der vorgegebenen Zeitdauer entweder:
- die Benutzerausrüstung (1) von dem Mobilkommunikationsnetz (100) getrennt wird,
- die Benutzerausrüstung (1) gezwungen wird, sich wieder mit dem Mobilkommunikationsnetz (100) zu verbinden, und/oder
- eine Zwangsübergabe für die Benutzerausrüstung (1) durchgeführt wird.

5. Verfahren nach einem der vorangehenden Ansprüche, wobei die Mobilitätsmanagementfunktionalität (200) Instruktionsinformationen umfasst und/oder Instruktionsinformationen vor dem ersten Schritt, während des ersten Schrittes oder zwischen dem ersten Schritt und dem zweiten Schritt empfängt, wobei die Instruktionsinformationen Folgendes spezifizieren:
- die Gruppe von Identitätsinformationen,
- die Gruppe erlaubter Kommunikationsdienste und/oder
- die Gruppe erlaubter Verbindungskontexte und/oder
- insbesondere die vorgegebene Zeitdauer und/oder
- insbesondere die vorgegebenen Gruppen von Trägern.

6. Verfahren nach einem der vorangehenden Ansprüche, wobei der Verbindungskontext des Benutzerausrüstung (1) - während des ersten Schrittes - Folgendem entspricht:
- dass sich die Benutzerausrüstung (1) im Ruhezustand befindet,
- dass sich die Benutzerausrüstung (1) im verbundenen Modus befindet,
- dass eine vorgegebene Gruppe von Trägern für die Benutzerausrüstung (1) aktiv ist und/oder
- dass eine vorgegebene Anzahl von Trägern für die Benutzerausrüstung (1) aktiv ist.

7. Verfahren nach einem der Ansprüche 2 bis 6, wobei die Identifikationsinformation Folgendes umfasst oder Folgendem entspricht:
- eine International Mobile Subscriber Identity (IMSI) in Bezug auf die Benutzerausrüstung (1) und/oder
- eine International Mobile Equipment Identity (IMEI) in Bezug auf die Benutzerausrüstung (1).

8. Verfahren nach einem der vorangehenden Ansprüche, wobei der spezifische Kommunikationsdienst, der durch oder für die Benutzerausrüstung (1) innerhalb der Dienstanfragenachricht angefragt wird, Folgendem entspricht oder Folgendes ist:
- ein Übergabeverfahren in Bezug auf die Benutzerausrüstung (1),
- ein Zellenverlagerungsverfahren in Bezug auf die Benutzerausrüstung (1),
- ein Anbindungsverfahren der Benutzerausrüstung (1),
- eine dedizierte Trägeraktivierung für die Benutzerausrüstung (1),
- eine Verfolgungsbereichsaktualisierung in Bezug auf die Benutzerausrüstung (1),
- eine Aufenthaltsbereichsaktualisierung bezüglich des Benutzerausrüstung (1) oder
- eine Routungsbereichsaktualisierung in Bezug auf die Benutzerausrüstung (1).

9. Verfahren nach einem der vorangehenden Ansprüche, wobei die Benutzerausrüstung (1) eine Internet of Things (loT)-Benutzerausrüstung (1) ist.

10. System für ein verbessertes Management des Zugangs einer Benutzerausrüstung (1) zu einem Mobilkommunikationsnetz (100), wobei das Mobilkommunikationsnetz (100) ein Zugangsnetz (110) und ein Kernnetz umfasst, wobei das Zugangsnetz (110) mindestens eine erste Sperrzone (10) umfasst, wobei eine zweite Sperrzone (20) in dem Zugangsnetz (110) des Mobilkommunikationsnetzes (100) oder in einem Zugangsnetz (110') eines weiteren Mobilkommunikationsnetzes (100') enthalten ist, wobei die Benutzerausrüstung (1) nativ die Erlaubnis besitzt, auf das Mobilkommunikationsnetz (100) oder das weitere Mobilkommunikationsnetz (100') innerhalb der zweiten Sperrzone (20) zugreifen zu dürfen, wobei:
- eine Mobilitätsmanagementfunktionalität (200) des Mobilkommunikationsnetzes (100) dafür eingerichtet ist, in einem ersten Schritt eine Dienstanfragenachricht zu empfangen, die einen Dienst betrifft, der durch oder für die Benutzerausrüstung (1) innerhalb der ersten Sperrzone (10) angefragt wird, wobei:
- falls die Benutzerausrüstung (1) nicht nativ die Erlaubnis besitzt, auf das Mobilkommunikationsnetz (100) innerhalb der ersten Sperrzone (10) zugreifen zu dürfen, die Mobilitätsmanagementfunktionalität (200) dafür eingerichtet ist, der Benutzerausrüstung (1) dennoch den Zugriff auf das Mobilkommunikationsnetz (100) zu gewähren, falls:
- ein spezifischer Kommunikationsdienst, der durch oder für die Benutzerausrüstung (1) in der Dienstanfragenachricht angefragt wird, Teil einer Gruppe erlaubter Kommunikationsdienste ist, und/oder
- ein spezifischer Verbindungskontext der Benutzerausrüstung (1) - während des ersten Schrittes - Teil einer Gruppe erlaubter Verbindungskontexte ist, und wobei die Mobilitätsmanagementfunktionalität (200) dafür eingerichtet ist, der Benutzerausrüstung (1) andernfalls den Zugriff auf das Mobilkommunikationsnetz (100) zu verweigern.

11. Mobilitätsmanagementfunktionalität (200) für ein verbessertes Management des Zugangs einer Benutzerausrüstung (1) zu einem Mobilkommunikationsnetz (100), insbesondere in Form einer Mobilitätsmanagemententität (200), wobei die Mobilitätsmanagementfunktionalität (200) in dem Mobilkommunikationsnetz (100) enthalten ist, wobei das Mobilkommunikationsnetz (100) ein Zugangsnetz (110) und ein Kernnetz umfasst, wobei das Zugangsnetz (110) mindestens eine erste Sperrzone (10) umfasst, wobei eine zweite Sperrzone (20) in dem Zugangsnetz (110) des Mobilkommunikationsnetzes (100) oder in einem Zugangsnetz (110') eines weiteren Mobilkommunikationsnetzes (100') enthalten ist, wobei die Benutzerausrüstung (1) nativ die Erlaubnis besitzt, auf das Mobilkommunikationsnetz (100) oder das weitere Mobilkommunikationsnetz (100') innerhalb der zweiten Sperrzone (20) zugreifen zu dürfen, wobei:
- die Mobilitätsmanagementfunktionalität (200) dafür eingerichtet ist, in einem ersten Schritt eine Dienstanfragenachricht zu empfangen, die einen Dienst betrifft, der durch oder für die Benutzerausrüstung (1) innerhalb der ersten Sperrzone (10) angefragt wird, wobei:
- falls die Benutzerausrüstung (1) nicht nativ die Erlaubnis besitzt, auf das Mobilkommunikationsnetz (100) innerhalb der ersten Sperrzone (10) zugreifen zu dürfen, die Mobilitätsmanagementfunktionalität (200) dafür eingerichtet ist, der Benutzerausrüstung (1) dennoch den Zugriff auf das Mobilkommunikationsnetz (100) zu gewähren, falls:
- ein spezifischer Kommunikationsdienst, der durch oder für die Benutzerausrüstung (1) in der Dienstanfragenachricht angefragt wird, Teil einer Gruppe erlaubter Kommunikationsdienste ist und/oder
- ein spezifischer Verbindungskontext der Benutzerausrüstung (1) - während des ersten Schrittes - Teil einer Gruppe erlaubter Verbindungskontexte ist und wobei die Mobilitätsmanagementfunktionalität (200) dafür eingerichtet ist, der Benutzerausrüstung (1) andernfalls den Zugriff auf das Mobilkommunikationsnetz (100) zu verweigern.

12. Computerprogramm, das Instruktionen umfasst, die, wenn sie in einem Netzknoten eines Mobilkommunikationsnetzes (100), insbesondere in einer Mobilitätsmanagementfunktionalität (200) des Mobilkommunikationsnetzes (100), ausgeführt werden, oder wenn sie teilweise in einer Mobilitätsmanagementfunktionalität (200) des Mobilkommunikationsnetzes und teilweise in einer Benutzerausrüstung (1) ausgeführt werden, den Netzknoten, insbesondere die Mobilitätsmanagementfunktionalität (200), oder die Mobilitätsmanagementfunktionalität (200) und die Benutzerausrüstung (1) veranlassen, ein Verfahren nach einem der Ansprüche 1 bis 9 durchzuführen.

13. Computerlesbares Speichermedium für ein verbessertes Management des Zugangs einer Benutzerausrüstung (1) zu einem Mobilkommunikationsnetz (100), wobei das computerlesbare Speichermedium Instruktionen umfasst, die, wenn sie in einem Netzknoten eines Mobilkommunikationsnetzes (100), insbesondere in einer Mobilitätsmanagementfunktionalität (200) des Mobilkommunikationsnetzes (100), ausgeführt werden, oder wenn sie teilweise in einer Mobilitätsmanagementfunktionalität (200) des Mobilkommunikationsnetzes und teilweise in einer Benutzerausrüstung (1) ausgeführt werden, den Netzknoten, insbesondere die Mobilitätsmanagementfunktionalität (200), oder die Mobilitätsmanagementfunktionalität (200) und die Benutzerausrüstung (1) veranlassen, ein Verfahren nach einem der Ansprüche 1 bis 9 durchzuführen.

## Revendications

1. Procédé permettant une gestion améliorée de l'accès d'un équipement d'utilisateur (1) à un réseau de communication mobile (100), dans lequel le réseau de communication mobile (100) comprend un réseau d'accès (110) et un réseau central, dans lequel le réseau d'accès (110) comprend au moins une première zone d'accès restreint (10), dans lequel une seconde zone d'accès restreint (20) est comprise dans le réseau d'accès (110) du réseau de communication mobile (100) ou dans un réseau d'accès (110') d'un autre réseau de communication mobile (100'), dans lequel l'équipement d'utilisateur (1) est nativement autorisé à accéder au réseau de communication mobile (100) ou à l'autre réseau de communication mobile (100') au sein de la seconde zone d'accès restreint (20), dans lequel le procédé comprend les étapes suivantes :
- dans une première étape, un message de demande de service, concernant un service demandé par ou pour l'équipement d'utilisateur (1) au sein de la première zone d'accès restreint (10), est transmis à une fonctionnalité de gestion de mobilité (200) du réseau de communication mobile (100),
- dans une seconde étape, postérieure à la première étape, si l'équipement d'utilisateur (1) n'a pas nativement la permission d'accéder au réseau de communication mobile (100) au sein de la première zone d'accès restreint (10), l'accès au réseau de communication mobile (100) est néanmoins accordé à l'équipement d'utilisateur (1) dans le(s) cas suivant(s) :
- un service de communication spécifique, demandé par ou pour l'équipement d'utilisateur (1) dans le message de demande de service, fait partie d'un groupe de services de communication autorisés et/ou
- un contexte de connexion spécifique de l'équipement d'utilisateur (1) - au cours de la première étape - fait partie d'un groupe de contextes de connexion autorisés, et dans lequel, à défaut, l'accès au réseau de communication mobile (100) est refusé à l'équipement d'utilisateur (1).

2. Procédé selon la revendication 1, dans lequel la permission native d'accès de l'équipement d'utilisateur (1) au réseau de communication mobile (100) ou à l'autre réseau de communication mobile (100') au sein de la seconde zone d'accès restreint (20) est due au fait qu'une information d'identification de l'équipement d'utilisateur (1) est comprise dans un autre groupe d'informations d'identification, dans lequel l'absence de permission native d'accès de l'équipement d'utilisateur (1) au réseau de communication mobile (100) au sein de la première zone d'accès restreint (10) est due au fait que l'information d'identification de l'équipement d'utilisateur (1) n'est pas comprise dans un groupe d'informations d'identification.

3. Procédé selon l'une quelconque des revendications précédentes, dans lequel la première zone d'accès restreint (10) se rapporte à :
- un code de zone de localisation (*Location Area Code*, LAC) spécifique ou à un groupe de codes locaux,
- un code de zone de routage ((*Routing Area Code,* RAC) spécifique ou à un groupe de codes de zones de routage, et/ou
- un code de zone de suivi (*Tracking Area Code,* TAC) (tracking area code) spécifique ou à un groupe de codes de zones de suivi, dans lequel, en particulier, la seconde zone d'accès restreint (20) se rapporte à :
- un autre code de zone de localisation spécifique ou à un autre groupe de codes locaux,
- un autre code de zone de routage spécifique ou à un autre groupe de codes de zones de routage, et/ou
- un autre code de zone de suivi spécifique ou à un autre groupe de codes de zones de suivi.

4. Procédé selon l'une quelconque des revendications précédentes, dans lequel, lors de la première étape, l'accès au réseau de communication mobile (100) n'est accordé que pour une durée prédéfinie, dans lequel, en particulier, la durée prédéfinie est fonction du service de communication spécifique et/ou du contexte de connexion spécifique et/ou de la première zone d'accès restreint (10) et/ou de l'information d'identification de l'équipement d'utilisateur (1), dans lequel, après que la durée prédéfinie a expiré :
- l'équipement d'utilisateur (1) est détaché du réseau de communication mobile (100) ou
- l'équipement d'utilisateur (1) est forcé de se rattacher à nouveau au réseau de communication mobile (100) et/ou
- un transfert forcé est réalisé pour l'équipement d'utilisateur (1).

5. Procédé selon l'une quelconque des revendications précédentes, dans lequel la fonctionnalité de gestion de mobilité (200) comprend des informations d'instruction et/ou reçoit des informations d'instruction avant la première étape, au cours de la première étape ou entre la première étape et la seconde étape, les informations d'instruction indiquant :
- le groupe d'informations d'identité,
- le groupe de services de communication autorisés, et/ou
- le groupe de contextes de connexion autorisés, et/ou
- en particulier, la durée prédéfinie, et/ou
- en particulier, les groupes prédéfinis de supports.

6. Procédé selon l'une quelconque des revendications précédentes, dans lequel le contexte de connexion de l'équipement d'utilisateur (1) - au cours de la première étape
- correspond au fait que :
- l'équipement d'utilisateur (1) est en mode repos,
- l'équipement d'utilisateur (1) est en mode connecté,
- un groupe prédéfini de supports est actif pour l'équipement d'utilisateur (1), et/ou
- un nombre prédéfini de supports est actif pour l'équipement d'utilisateur (1).

7. Procédé selon l'une quelconque des revendications 2 à 6, dans lequel l'information d'identification comprend ou correspond à :
- une identité internationale d'abonné mobile, IMSI (*international mobile subscriber identity*)*,* se rapportant à l'équipement d'utilisateur (1), et/ou
- une identité internationale d'équipement mobile, IMEI (*international mobile equipment identity*), se rapportant à l'équipement d'utilisateur (1).

8. Procédé selon l'une quelconque des revendications précédentes, dans lequel le service de communication spécifique, demandé par ou pour l'équipement d'utilisateur (1) dans le message de demande de service, est ou correspond à :
- une *procédure de transfert relative à l'équipement d'utilisateur (1),*
- *une procédure de relocalisation cellulaire relative à l'équipement d'utilisateur (1),*
- *une procédure de rattachement de l'équipement d'utilisateur (1),*
- *une activation de support dédié pour l'équipement d'utilisateur (1),*
- *une mise à jour de zone de suivi relative à l'équipement d'utilisateur (1),*
- *une mise à jour de zone de localisation relative à l'équipement d'utilisateur (1), ou*
- *une mise à jour de zone de routage relative à l'équipement d'utilisateur (1).*

9. Procédé selon l'une quelconque des revendications précédentes, dans lequel l'équipement d'utilisateur (1) est un équipement d'utilisateur (1) de l'Internet des objets, IoT *(Internet of Things) .*

10. Système permettant une gestion améliorée de l'accès d'un équipement d'utilisateur (1) à un réseau de communication mobile (100), dans lequel le réseau de communication mobile (100) comprend un réseau d'accès (110) et un réseau central, dans lequel le réseau d'accès (110) comprend au moins une première zone d'accès restreint (10), dans lequel une seconde zone d'accès restreint (20) est comprise dans le réseau d'accès (110) du réseau de communication mobile (100) ou dans un réseau d'accès (110') d'un autre réseau de communication mobile (100'), dans lequel l'équipement d'utilisateur (1) est nativement autorisé à accéder au réseau de communication mobile (100) ou à l'autre réseau de communication mobile (100') au sein de la seconde zone d'accès restreint (20), dans lequel :
- une fonctionnalité de gestion de mobilité (200) du réseau de communication mobile (100) est configurée pour recevoir un message de demande de service concernant un service demandé par ou pour l'équipement d'utilisateur (1) au sein de la première zone d'accès restreint (10), dans une première étape, dans lequel :
- si l'équipement d'utilisateur (1) n'a pas nativement la permission d'accéder au réseau de communication mobile (100) au sein de la première zone d'accès restreint (10), la fonctionnalité de gestion de mobilité (200) est configurée pour accorder néanmoins à l'équipement d'utilisateur (1) l'accès au réseau de communication mobile (100) dans le(s) cas suivant(s) :
- un service de communication spécifique, demandé par ou pour l'équipement d'utilisateur (1) dans le message de demande de service, fait partie d'un groupe de services de communication autorisés et/ou
- un contexte de connexion spécifique de l'équipement d'utilisateur (1) - au cours de la première étape - fait partie d'un groupe de contextes de connexion autorisés,
et dans lequel, à défaut, la fonctionnalité de gestion de mobilité (200) est configurée pour refuser à l'équipement d'utilisateur (1) l'accès au réseau de communication mobile (100)

11. Fonctionnalité de gestion de mobilité (200) permettant une gestion améliorée de l'accès d'un équipement d'utilisateur (1) à un réseau de communication mobile (100), en particulier sous la forme d'une entité de gestion de mobilité (200), dans laquelle la fonctionnalité de gestion de mobilité (200) est comprise dans le réseau de communication mobile (100), dans laquelle le réseau de communication mobile (100) comprend un réseau d'accès (110) et un réseau central, dans laquelle le réseau d'accès (110) comprend au moins une première zone d'accès restreint (10), dans laquelle une seconde zone d'accès restreint (20) est comprise dans le réseau d'accès (110) du réseau de communication mobile (100) ou dans un réseau d'accès (110') d'un autre réseau de communication mobile (100'), dans laquelle l'équipement d'utilisateur (1) est nativement autorisé à accéder au réseau de communication mobile (100) ou à l'autre réseau de communication mobile (100') au sein de la seconde zone d'accès restreint (20), dans laquelle :
- la fonctionnalité de gestion de mobilité (200) est configurée pour recevoir un message de demande de service concernant un service demandé par ou pour l'équipement d'utilisateur (1) au sein de la première zone d'accès restreint (10), dans une première étape, dans laquelle :
- si l'équipement d'utilisateur (1) n'a pas nativement la permission d'accéder au réseau de communication mobile (100) au sein de la première zone d'accès restreint (10), la fonctionnalité de gestion de mobilité (200) est configurée pour accorder néanmoins à l'équipement d'utilisateur (1) l'accès au réseau de communication mobile (100) dans le(s) cas suivant(s) :
- un service de communication spécifique, demandé par ou pour l'équipement d'utilisateur (1) dans le message de demande de service, fait partie d'un groupe de services de communication autorisés et/ou
- un contexte de connexion spécifique de l'équipement d'utilisateur (1) - au cours de la première étape - fait partie d'un groupe de contextes de connexion autorisés, et dans laquelle, à défaut, la fonctionnalité de gestion de mobilité (200) est configurée pour refuser à l'équipement d'utilisateur (1) l'accès au réseau de communication mobile (100).

12. Programme informatique comprenant des instructions qui, lorsqu'elles sont exécutées sur un nœud de réseau d'un réseau de communication mobile (100), en particulier dans une fonctionnalité de gestion de mobilité (200) du réseau de communication mobile (100), ou lorsqu'elles sont exécutées en partie dans une fonctionnalité de gestion de mobilité (200) du réseau de communication mobile et en partie sur un équipement d'utilisateur (1), font mettre en œuvre au nœud de réseau, en particulier à la fonctionnalité de gestion de mobilité (200), ou à la fonctionnalité de gestion de mobilité (200) et à l'équipement d'utilisateur (1) un procédé selon l'une quelconque des revendications 1 à 9.

13. Support de stockage lisible par ordinateur, permettant une gestion améliorée de l'accès d'un équipement d'utilisateur (1) à un réseau de communication mobile (100), le support de stockage lisible par ordinateur comprenant des instructions qui, lorsqu'elles sont exécutées sur un nœud de réseau d'un réseau de communication mobile (100), en particulier dans une fonctionnalité de gestion de mobilité (200) du réseau de communication mobile (100), ou lorsqu'elles sont exécutées en partie dans une fonctionnalité de gestion de mobilité (200) du réseau de communication mobile et en partie sur un équipement d'utilisateur (1), font mettre en œuvre au nœud de réseau, en particulier à la fonctionnalité de gestion de mobilité (200), ou à la fonctionnalité de gestion de mobilité (200) et à l'équipement d'utilisateur (1) un procédé selon l'une quelconque des revendications 1 à 9.
